# EUROPEAN PATENT APPLICATION

(11) **EP 4 410 549 A1**
(43) Date of publication of application: **07.08.2024**
(21) Application number: 22876041.9
(22) Date of filing: 22.09.2022
(51) Int. Cl.: B32B 27/36, B29C 48/08, B29C 48/335, B65D 65/40, C08J 5/18

(54) **SEALANT FILM, LAMINATE FILM IN WHICH SAME IS USED, PACKAGING BAG, PACKAGING CONTAINER, AND METHOD FOR PRODUCING SEALANT FILM**

(30) Priority: 29.09.2021 JP 2021159097
(71) Applicant: Toppan Holdings Inc., Tokyo 110-0016 (JP)
(72) Inventor: YOSHINAGA, Masanobu, Tokyo 110-0016 (JP)
(74) Representative: TBK
(86) International application number: PCT/JP2022/035411
(87) International publication number: WO 2023/054174

(57) **Abstract**

A sealant film (1) including a polyester layer (11) containing polyester as a main ingredient, in which the polyester is made of a structural unit derived from ethylene glycol, a structural unit derived from terephthalic acid and a structural unit derived from isophthalic acid, a ratio of the structural unit derived from isophthalic acid is 3.0 mol% or more and 15 mol% or less relative to ratios of the structural unit derived from terephthalic acid and the structural unit derived from isophthalic acid constituting the polyester, and a content rate of an oligomer contained in polyester layer (11) is less than 2.0% by mass.

## Description

### TECHNICAL FIELD

The present invention relates to a sealant film, a multilayer film including the same, a packaging bag and a packaging container, and a method for producing a sealant film.

### BACKGROUND ART

A sealant film is widely used in a packaging bag of food, beverage, medicine or the like. A sealant film is provided on an innermost layer of a packaging bag, and heat-sealed to seal the packaging bag. As a sealant film, a polyolefin resin such as polyethylene or polypropylene, having high seal strength, has been used.

However, such a sealant film easily adsorbs an ingredient made of an organic compound such as fat and oil or perfume, and thus a packaging bag having such a sealant film has the problem of adsorbing a fragrance ingredient, a medicinal ingredient or the like of contents.

As a solution, a polyester resin, a polyacrylonitrile copolymer (PAN), a polyethylene terephthalate (PET) or the like is used in place of a polyolefin resin. In particular, a polyester resin can not only allow contents to keep low adsorption properties, but also impart low-temperature sealing properties and control fluidity during sealing, by selection of dibasic acid and glycol as comonomer ingredients.

On the other hand, a problem is that the presence of such comonomer ingredients generate a low-molecular weight substance (oligomer) as a by-product at a polymerization stage, deteriorating odor and taste, lowering adsorption properties of contents, or the like.

Japanese Patent Laying-Open No. 2006-305975 (PTL 1) discloses a sealant film consisting of an isophthalic acid-modified PET resin as a polyester resin, in which the resin is produced by a T-die casting method. It is also disclosed that the sealant film is excellent in low adsorption properties and barrier properties, and can provide stable heat-sealing.

### CITATION LIST

### PATENT LITERATURE

PTL 1: Japanese Patent Laying-Open No. 2006-305975

### SUMMARY OF INVENTION

### TECHNICAL PROBLEM

However, the sealant film described in PTL 1 has room for improvement in odor and taste. The present inventors have focused on dibasic acid and glycol as comonomer ingredients of a polyester resin, and have found that generation of an oligomer can be suppressed by limiting the dibasic acid to terephthalic acid and isophthalic acid and limiting the glycol to ethylene glycol, respectively, copolymerizing terephthalic acid and isophthalic acid in a specified ratio, and manufacturing by an inflation method. Thus, reduction in adsorption properties of contents, and deterioration in odor and taste can be suppressed.

The present disclosure has been made in view of above problems, and has an object to allow a sealant film including a polyester resin to not only keep low adsorption properties of contents, but also inhibit odor and taste from being deteriorated.

### SOLUTION TO PROBLEM

[1] A sealant film including a polyester layer containing polyester as a main ingredient,
   wherein the polyester is made of a structural unit derived from ethylene glycol, a structural unit derived from terephthalic acid and a structural unit derived from isophthalic acid,
   a ratio of the structural unit derived from isophthalic acid is 3.0 mol% or more and 15 mol% or less relative to ratios of the structural unit derived from terephthalic acid and the structural unit derived from isophthalic acid constituting the polyester, and
   a content rate of an oligomer contained in the polyester layer is less than 2.0% by mass.
[2] The sealant film according to [1], wherein the polyester has a glass transition temperature of 60°C or more and 80°C or less.
[3] The sealant film according to [1] or [2], including a surface layer,
   wherein the surface layer is at least one selected from the group consisting of polyethylene, an ethylene-acrylate copolymer and an ethylene-methacrylate copolymer.
[4] The sealant film according to [3], further including an intermediate layer between the polyester layer and the surface layer,
   wherein the intermediate layer is at least one selected from the group consisting of an acid anhydride-grafted polyethylene and an ethylene-ester copolymer.
[5] The sealant film according to any one of [1] to [4], wherein the polyester layer has a thickness of 20 µm or more and 50 µm or less.
[6] A multilayer film including:
   a base film; and
   the sealant film according to any one of [1] to [5].
[7] The multilayer film according to [6], further including a gas barrier film between the base film and the sealant film.
[8] A packaging bag including the multilayer film according to [6] or [7] sealed such that the sealant films are fused to each other.
[9] A packaging container including the multilayer film according to [6] or [7] sealed such that the sealant films are fused to each other.
[10] A method for producing a sealant film including a polyester layer containing polyester as a main ingredient,
   wherein the production method of the sealant film includes an extrusion step of extruding a resin constituting the polyester layer, by an inflation method,
   a temperature in the extrusion step is 180°C or more and 260°C or less,
   the polyester is made of a structural unit derived from ethylene glycol, a structural unit derived from terephthalic acid and a structural unit derived from isophthalic acid,
   a ratio of the structural unit derived from isophthalic acid is 3.0 mol% or more and 15 mol% or less relative to ratios of the structural unit derived from terephthalic acid and the structural unit derived from isophthalic acid constituting the polyester, and
   a content rate of an oligomer contained in the polyester layer is less than 2.0% by mass.

### ADVANTAGEOUS EFFECTS OF INVENTION

According to the present disclosure, it is possible to allow a sealant film including a polyester resin to not only keep low adsorption properties of contents, but also inhibit odor and taste from being deteriorated.

### BRIEF DESCRIPTION OF DRAWINGS

Fig. 1 is a schematic cross-sectional view showing one example of a sealant film used in embodiment 1.
Fig. 2 is a schematic cross-sectional view showing one example of a sealant film used in embodiment 2.
Fig. 3 is a schematic cross-sectional view showing one example of a sealant film used in embodiment 3.
Fig. 4 is a schematic cross-sectional view showing one example of a sealant film used in embodiment 4.
Fig. 5 is a schematic cross-sectional view showing one example of a sealant film used in embodiment 5.
Fig. 6 is a schematic cross-sectional view showing one example of a sealant film used in embodiment 6.
Fig. 7 is a schematic cross-sectional view showing one example of a multilayer film of embodiment 7.
Fig. 8 is a schematic cross-sectional view showing one example of the multilayer film of embodiment 7.
Fig. 9 is a schematic cross-sectional view showing one example of a multilayer film of embodiment 8.
Fig. 10 is a schematic cross-sectional view showing one example of the multilayer film of embodiment 8.
Fig. 11 is a schematic cross-sectional view showing one example of a multilayer film of embodiment 9.

### DESCRIPTION OF EMBODIMENTS

Hereinafter, a description is made of embodiments of the present disclosure with reference to the drawings. In the drawings, the same reference signs denote the same parts or corresponding parts.

### [Embodiment 1]

### <Sealant film>

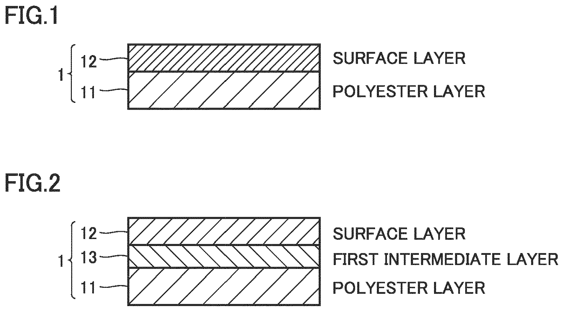

Referring to Fig. 1, a sealant film 1 of this embodiment is a sealant film made of two layers of a polyester layer 11 (on the seal side) and a surface layer 12. Sealant film 1 of this embodiment is made of two layers, and may also be made of only polyester layer 11.

### (Polyester layer)

Polyester layer 11 contains polyester as a main ingredient. The phrase "contains as a main ingredient" means, for example, that the amount of polyester contained is more than 50% by mass relative to the total amount of polyester layer 11. The content rate of polyester contained in polyester layer 11 is preferably 90% by mass or more, more preferably 95% by mass or more, further preferably 98% by mass. Other polymer materials, various additives or the like may be blended in polyester layer 11.

The polyester in this embodiment is made of a structural unit derived from ethylene glycol, a structural unit derived from terephthalic acid and a structural unit derived from isophthalic acid. The polyester has a number average molecular weight of 15000 or more and 21000 or less.

The ratio of the structural unit derived from isophthalic acid is 3.0 mol% or more and 15 mol% or less relative to the ratios of the structural unit derived from terephthalic acid and the structural unit derived from isophthalic acid constituting the polyester. When the ratio of the structural unit derived from isophthalic acid is less than 3.0 mol%, the sealant film is inferior in low-temperature sealing properties. When the ratio of the structural unit derived from isophthalic acid is more than 15 mol%, an amorphous or low-crystalline polyester layer is formed and the amount of adsorption of contents is increased. The ratio of the structural unit derived from isophthalic acid is preferably 8.0 mol% or more, more preferably 9.0 mol% or more, further preferably 10 mol% or more, and may be 10.5 mol% or more, and is preferably 13 mol% or less, more preferably 12.5 mol% or less, further preferably 12 mol% or less, and may be 11.5 mol% or less.

Polyester layer 11 contains an oligomer. The oligomer in this embodiment is a polymer having a smaller molecular weight than that of polyester generated at a polymerization stage of polyester, and encompasses both a linear oligomer and a cyclic oligomer. The oligomer causes the problems of deterioration in odor and taste and reduction in adsorption properties of contents. The present inventors have found that the content rate of the oligomer contained in polyester layer 11 can be less than 2.0% by mass by adopting the above-mentioned ingredients and ratios in the configuration of the polyester and performing production by a method described below. When the content rate of the oligomer contained in polyester layer 11 is less than 2.0% by mass, the above-mentioned problems are suppressed. The content rate of the oligomer contained in polyester layer 11 is preferably 1.8% by mass or less.

The content rate of the oligomer contained in polyester layer 11 can be measured with high performance liquid chromatography (HPLC). Specifically, a polyester layer serving as a measurement subject is dissolved in hexafluoroisopropanol (HFIP), then the polyester layer is re-precipitated in acetonitrile and the supernatant was subjected to filtration with a filter to prepare a sample solution, and measurement is performed in the following conditions with reverse-phase HPLC (1260 Infinity II LC system made by Agilent Technologies, Inc.).

### [Measurement condition]

Detector: ultraviolet absorption photometer
Measurement wavelength: 242 nm
Column: reverse-phase column C18 ODS5 µ (length: 250 mm, inner diameter: 4.6 mm)
Column temperature: 25°C
Eluent: acetonitrile/water = 7/3
Flow rate: 1.5 ml/min
Amount of sample injected: 20 µl

A molecular weight distribution by HPLC, of the oligomer in this embodiment, shows a plurality of peak portions at an elution time of 5 minutes to 20 minutes. In peak waveform processing with a chromatogram, peak areas are each vertically divided with respect to each elution time and the quantity of each of the peak areas is normalized with the measured weight of the polyester layer. Such processing is repeated three times and the average value of the peak areas is adopted. The peak area may be any value as long as it is less than 2%.

The thickness of polyester layer 11 can be appropriately changed depending on the intended use, and is, for example, 20 µm or more and 50 µm or less. When the thickness of polyester layer 11 is less than 20 µm, the amount of adsorption of contents is increased. When the thickness of polyester layer 11 is more than 50 µm, the load of discharge in film formation is large and no film formation may be made. The thickness of polyester layer 11 is preferably 25 µm or more and 45 µm or less.

Polyester layer 11 may contain an anti-blocking agent. This is because an anti-blocking agent is contained to enhance sliding ability of polyester layer 11, hardly causing blocking. Examples of the anti-blocking agent include silica, talc and diatomaceous earth. The amount of the anti-blocking agent contained is, for example, 0.1% by mass or more and 3% by mass or less, and is preferably 0.5% by mass or more and 1.5% by mass or less.

The glass transition temperature (Tg) of the polyester is preferably 60°C or more and 80°C or less, and more preferably 70°C or more and 75°C or less. In this case, sealant film 1 can be obtained having appropriate seal strength. Tg can be measured based on JIS K7121.

The crystallization temperature (Tc) of the polyester is preferably 130°C or more, and more preferably 135°C or more. In this case, sealant film 1 can be obtained having appropriate seal strength. Tc can be measured based on JIS K7121.

The melting temperature (Tm) of the polyester is preferably 200°C or more, and more preferably 210°C or more. In this case, sealant film 1 can be obtained having appropriate seal strength. Tm can be measured based on JIS K7121.

### (Surface layer)

Sealant film 1 may have surface layer 12.

Examples of surface layer 12 include polyethylene (PE) and an ethylene-ester copolymer. Examples of the ethylene-ester copolymer include an ethylene-acrylate copolymer and an ethylene-methacrylate copolymer.

The thickness of sealant film 1 can be appropriately changed depending on the intended use, and is, for example, 30 µm or more and 80 µm or less.

Sealant film 1 of this embodiment is provided with the above-mentioned layers, thus it has non-adsorption properties such that adsorption or absorption of contents (fragrance ingredient, medicinal ingredient, etc.) is suppressed, and can inhibit an oligomer from being free. The sealant film also has sufficient seal strength and low-temperature sealing properties.

Regarding the low-temperature sealing properties, specifically, the sealing initiation temperature of the sealant film is preferably 130°C or less in terms of the temperature where a seal strength of 5 N/15 mm width or more is exhibited under a sealing condition of a sealing pressure of 0.1 MPa and a sealing time of 1.0 second. The sealing initiation temperature is measured according to JIS Z0238.

Regarding the seal strength, specifically, the seal strength of the sealant film is preferably 30 N/15 mm width or more under a sealing condition of a sealing temperature of 160°C, a sealing pressure of 0.1 MPa and a sealing time of 1.0 second. The seal strength is measured according to JIS Z0238.

### [Embodiment 2]

Referring to Fig. 2, sealant film 1 of this embodiment is the same as that of embodiment 1, except that a first intermediate layer 13 is provided between polyester layer 11 and surface layer 12.

First intermediate layer 13 is provided to enhance adhesive force between polyester layer 11 and surface layer 12 and enhance seal strength of sealant film 1. Examples of first intermediate layer 13 include acid anhydride-grafted polyethylene (PE) and an ethylene-ester copolymer. Examples of the acid anhydride-grafted PE include maleic anhydride-grafted PE and itaconic anhydride-grafted PE.

### [Embodiment 3]

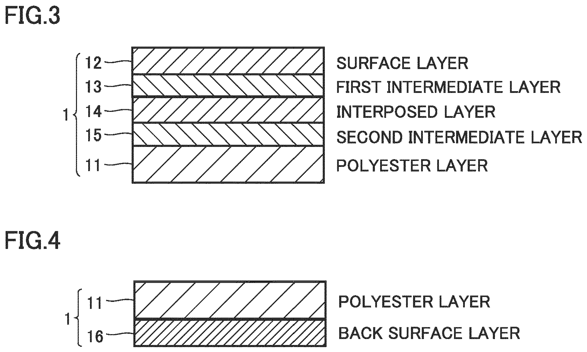

Referring to Fig. 3, sealant film 1 of this embodiment is a sealant film obtained by stacking surface layer 12, first intermediate layer 13, an interposed layer 14, a second intermediate layer 15, and polyester layer 11 in this order. The sealant film is the same as that of embodiment 2, except that interposed layer 14 and second intermediate layer 15 are further stacked.

For interposed layer 14, the same material as that for surface layer 12 can be used. Surface layer 12 and interposed layer 14 may include the same material or may include different materials.

For second intermediate layer 15, the same material as that for first intermediate layer 13 can be used. First intermediate layer 13 and second intermediate layer 15 may include the same material or may include different materials.

### [Embodiment 4]

Referring to Fig. 4, sealant film 1 of this embodiment is a sealant film made of two layers of polyester layer 11 and a back surface layer 16.

When the configuration of the sealant film of this embodiment is adopted, the polyester layer is not usually contacted with contents and thus deterioration in odor and taste due to an oligomer, as described above, is considered to be hardly caused. However, for example, when food or beverage, such as alcohol or oily food, or medicine such as a patch is filled as contents, an oligomer in the polyester layer may be leaked out into such contents due to driving force of such contents. Sealant film 1 of this embodiment is provided with polyester layer 11, and thus can exert the effects even in this case.

For back surface layer 16, the same material as that for surface layer 12 can be used.

### [Embodiment 5]

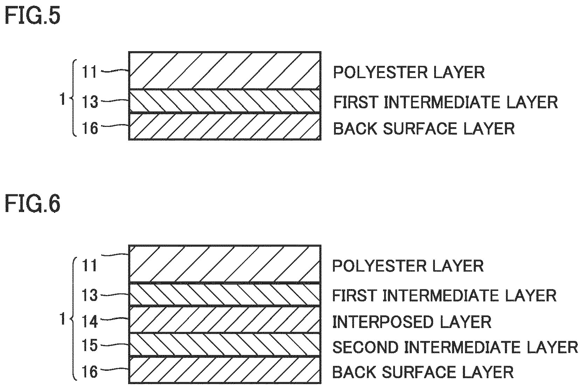

Referring to Fig. 5, sealant film 1 of this embodiment is the same as that of embodiment 4, except that first intermediate layer 13 is provided between polyester layer 11 and back surface layer 16.

First intermediate layer 13 is provided to enhance adhesive force between polyester layer 11 and back surface layer 16 and enhance seal strength of sealant film 1.

### [Embodiment 6]

Referring to Fig. 6, sealant film 1 of this embodiment is a sealant film obtained by stacking polyester layer 11, first intermediate layer 13, interposed layer 14, second intermediate layer 15, and back surface layer 16 in this order. The sealant film is the same as that of embodiment 5, except that interposed layer 14 and second intermediate layer 15 are further stacked.

Back surface layer 16 and interposed layer 14 may include the same material or may include different materials.

### [Embodiment 7]

### <Multilayer film>

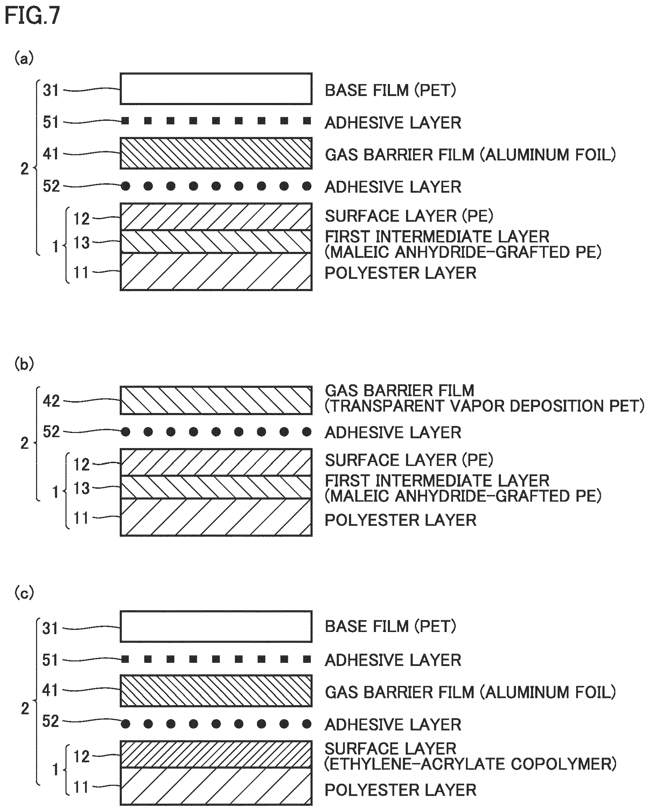

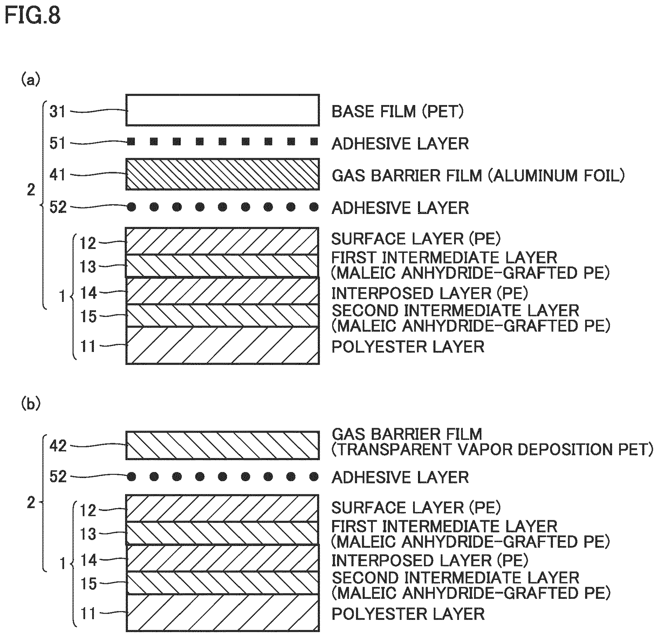

Referring to Figs. 7 and 8, a multilayer film 2 (packaging material) of this embodiment is a multilayer film obtained by stacking a base film 31, an adhesive layer 51, a gas barrier film 4, an adhesive layer 52, and sealant film 1 in this order.

In base film 31, a plastic film, paper, a nonwoven fabric or the like can be used, but not particularly limited, as long as it has mechanical strength and dimensional stability. Examples of the constituent material of the plastic film include polyester such as polyethylene terephthalate (PET) or polyethylene naphthalate, polyolefin such as PE or polypropylene, polystyrene, polyamide such as 6-nylon, polycarbonate, polyacrylonitrile, and polyimide. The plastic film is preferably PET, PE, or paper.

Multilayer film 2 of this embodiment may have gas barrier film 4. Gas barrier film 4 can suppress degradation of contents due to oxygen gas, decrease of contents due to dissipation thereof to the outside, etc.

As a gas barrier film 41, metal foil such as aluminum foil, or a multilayer film of metal foil and a plastic film can be used. As a gas barrier film 42, a transparent vapor deposition film having a vapor deposition layer of inorganic oxide or metal on a plastic film can be used. Examples of the plastic film include those described above, and examples of the transparent vapor deposition film include a vapor deposition film of metal oxide such as silicon oxide or aluminum oxide. As the gas barrier film, a film of an ethylene-vinyl alcohol copolymer, a polyamide resin, a polyvinylidene chloride resin, a polyacrylonitrile resin or the like can also be used. In this embodiment, when the transparent vapor deposition film is used as gas barrier film 4, neither base film 31 nor adhesive layer 51 may be provided.

### (Adhesive layer)

Multilayer film 2 of this embodiment may have adhesive layer 51 between base film 31 and gas barrier film 41. Adhesive layer 51 can enhance adhesive strength between base film 31 and gas barrier film 41.

As an adhesive constituting adhesive layer 51, an adhesive for dry lamination can be suitably used, but not particularly limited. Examples of the adhesive for dry lamination include a two-component curing type urethane adhesive, a polyester-urethane adhesive, a polyether urethane adhesive, an acrylic adhesive, a polyester adhesive, a polyamide adhesive, and an epoxy adhesive.

Among the above-mentioned adhesives, a two-component curing type adhesive that is excellent in adhesive force and hardly reduces the adhesive force due to a chemical ingredient from contents can be suitably used. The two-component curing type adhesive is made of a main agent and a curing agent, and examples thereof include a two-component curing type adhesive made of polyester, polyol and polyfunctional polyisocyanate. Examples of a method for laminating base film 31 and gas barrier film 41 with such an adhesive include a dry lamination method.

Multilayer film 2 of this embodiment may have adhesive layer 52 between sealant film 1 and gas barrier film 4. As an adhesive constituting adhesive layer 52, the same material as that for adhesive layer 51 can be used. The ingredient of the adhesive constituting adhesive 51 and that of the adhesive constituting adhesive layer 52 may be the same or different. Examples of a method for laminating sealant film 1 and gas barrier film 4 include a dry lamination method.

Multilayer film 2 of this embodiment is provided with sealant film 1 of the above embodiment, thus it has non-adsorption properties such that adsorption or absorption of contents (fragrance ingredient, medicinal ingredient, etc.) is suppressed, and can inhibit an oligomer from being free. It also has sufficient seal strength and low-temperature sealing properties. Also in the following embodiments, the same effect is achieved by providing sealant film 1 of the above embodiment.

### [Embodiment 8]

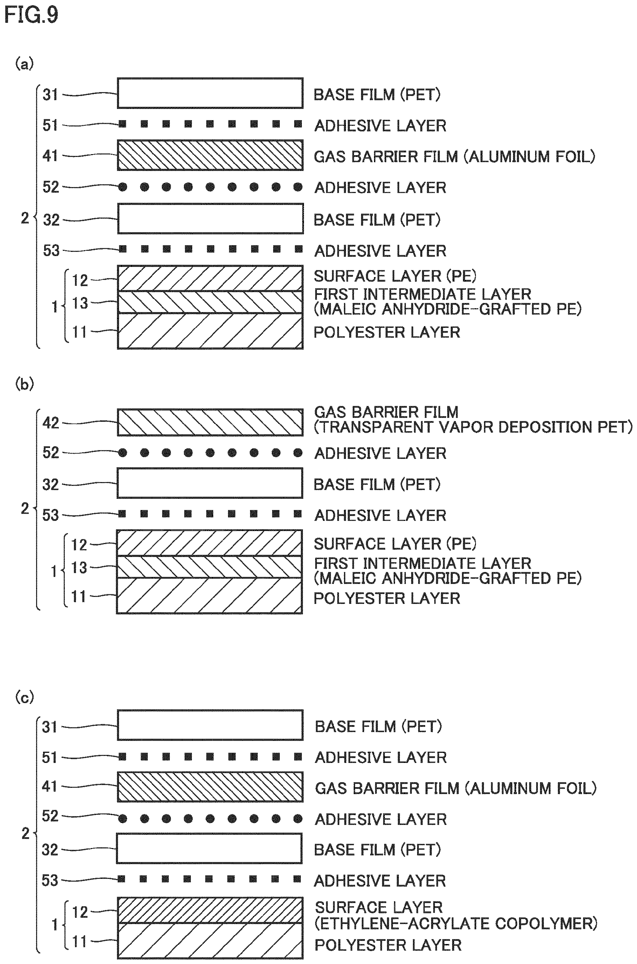

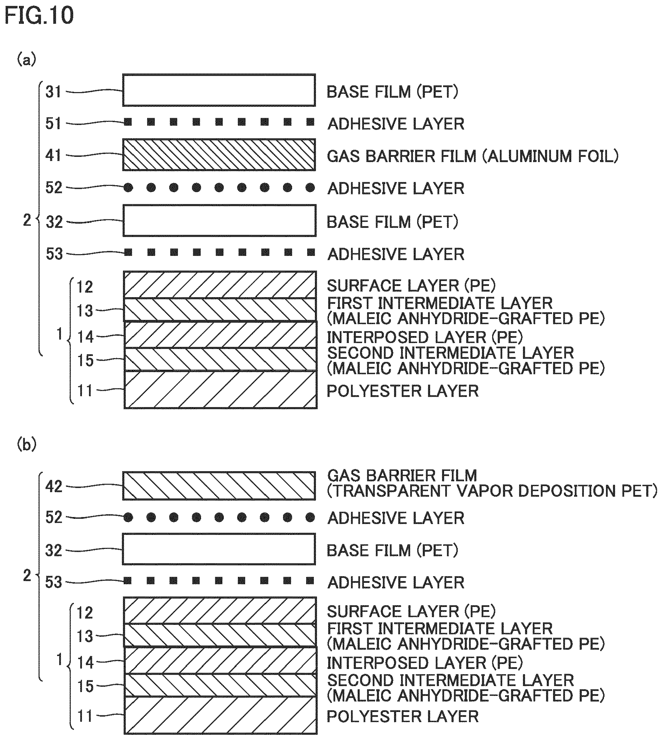

Referring to Figs. 9 and 10, multilayer film 2 of this embodiment is a multilayer film obtained by stacking base film 31, adhesive layer 51, gas barrier film 4, adhesive layer 52, a base film 32, an adhesive layer 53, and sealant film 1 in this order. The multilayer film is the same as that of embodiment 7, except that base film 32 and adhesive layer 53 are further stacked.

For base film 32, the same material as that for base film 31 can be used. Base film 31 and base film 32 may include the same material or may include different materials.

As an adhesive constituting adhesive layer 53, the same material as that for adhesive layer 51 can be used. The ingredient of the adhesive constituting adhesive 51, that of the adhesive constituting adhesive layer 52 and that of the adhesive constituting adhesive layer 53 may be the same or different. Examples of a method for laminating sealant film 1 and base film 32 include a dry lamination method.

### [Embodiment 9]

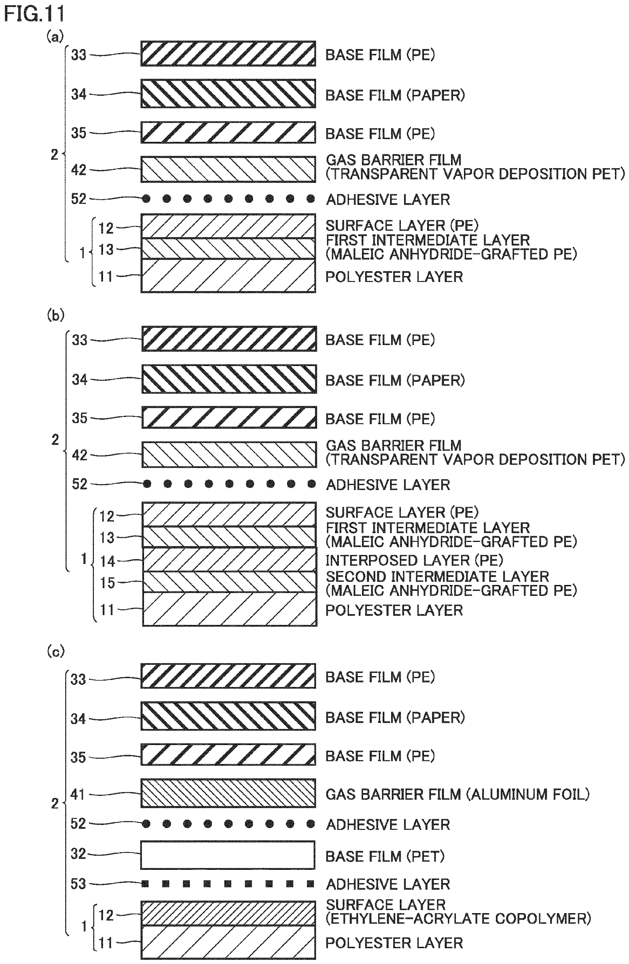

Referring to Fig. 11, multilayer film 2 of this embodiment is a multilayer film obtained by stacking a base film 33, a base film 34, a base film 35, gas barrier film 4, adhesive layer 52, and sealant film 1 in this order. Base film 32 and adhesive layer 53 may be further stacked between adhesive layer 52 and sealant film 1.

### [Embodiment 10]

### <Packaging bag>

The multilayer film formed as described above is used to form a packaging bag having a desired shape. For example, a pillow type packaging bag, a gusset type packaging bag, a self-standing type packaging bag, etc., may be produced depending on the purpose (design of the packaging bag, amount of contents, ease of use, etc.).

Examples of contents include food, beverage, medicine or quasi-drug. The packaging bag of this embodiment can be particularly suitably used for a content containing a fragrance ingredient, a medicinal ingredient or the like (an ingredient that is easily adsorbed to or absorbed in a packaging bag, or an ingredient that causes a problem when it is adsorbed to or absorbed in a packaging bag). Specifically, the packaging bag of this embodiment can be suitably used for accommodating, for example, an alcohol beverage, a cosmetic product containing a fragrance ingredient such as perfume, or a patch or mouthwash containing a medicinal ingredient.

### [Embodiment 11]

### <Packaging container>

The multilayer film formed as described above is used to form a packaging container having a desired shape. For example, a brick type packaging container, a cup type packaging container, a tray type packaging container, etc., may be produced depending on the purpose (design of the packaging container, amount of contents, ease of use, etc.). Examples of contents include those that are the same as those in embodiment 10.

### [Embodiment 12]

### <Method for producing sealant film>

The sealant film in this embodiment is produced by an inflation method. The inflation method includes an extrusion step of extruding a resin constituting the polyester layer, in which the temperature in the extrusion step is 180°C or more and 260°C or less. The sealant film is produced by such a method and thus an oligomer can be inhibited from being free.

The inflation method in this embodiment is preferably an air cooling inflation method. When the surface layer and the intermediate layer are provided, a resin constituting the polyester layer, a resin constituting the surface layer and a resin constituting the intermediate layer are preferably co-extruded. Hereinafter, a method for producing the sealant film composed of the polyester layer, the surface layer and the intermediate layer by an air cooling inflation method is described.

The air cooling inflation method has a co-extrusion step of melting the resin constituting the polyester layer, the resin constituting the surface layer and the resin constituting the intermediate layer in separate extruders and co-extruding the resins molten, through a die, an inflation cooling step of supplying air to the resins co-extruded and molten, to inflate them into a tube shape and at the same time air-cool and solidify the resins molten, by the air, obtaining a tube film, and a drawing step of drawing the tube film with evacuating air in the tube film.

An inflation molding machine that can be used in the method is not particularly limited, as long as two or more layers can be extruded.

The temperature in the extruder in the co-extrusion step is 180°C or more and 260°C or less, and is preferably 200°C or more and 230°C or less. When the temperature in the extruder is less than 180°C, the resins used may not be molten. When the temperature in the extruder is more than 260°C, the amount of a free oligomer can be increased. The resins used can also be thermally degraded.

The shape of the die in the inflation molding machine is usually round. The diameter of the die is, for example, 100 mmΦ or more and 300 mmΦ or less, and is preferably 200 mmΦ or more and 250 Φmm or less. When the diameter of the die is less than 100 mmΦ, the film formation efficiency can be inferior. When the diameter of the die is more than 300 mmΦ, a valve shape of the sealant film is not stable.

The degree of inflation in the inflation cooling step is determined by the blowing ratio, and has an effect on seal strength, film formation stability, or the like. The blowing ratio is, for example, 1.5 or more and 2.5 or less, and is preferably 1.8 or more and 2.2 or less. When the blowing ratio is less than 1.5, the film formation efficiency can be inferior. When the blowing ratio is more than 2.5, a valve shape of the sealant film is not stable.

The molding speed in the drawing step is, for example, 5.0 m/min or more and 25 m/min or less, and is preferably 10 m/min or more and 20 m/min or less. When the molding speed is less than 5.0 m/min, no stable film formation may be made. When the molding speed is more than 25 m/min, cracking of the sealant film can be caused.

### EXAMPLES

Hereinafter, a more detailed description is made of the present disclosure with reference to examples, but the present disclosure is not limited thereto.

### (Examples 1 to 4 and Comparative Examples 1 to 3)

Each resin having a composition shown in Table 1 was used as a polyester resin constituting a polyester layer in a sealant film of a multilayer film having a layer configuration of Fig. 7(a). PE was used in a surface layer and maleic anhydride-grafted PE was used in an intermediate layer.

In the column "Configuration of polyester layer" in Table 1, TPA represents "terephthalic acid", IPA represents "isophthalic acid", EG represents "ethylene glycol", and other glycol represents a glycol ingredient other than EG, respectively, used in Comparative Examples 5 to 11 described below. For example, it is meant that the polyester layer in Example 1 includes 95 mol% of TPA and 5 mol% of IPA as dicarboxylic acid and 100 mol% of EG as diol.

An inflation molding machine for multiple layers of three kinds of three layers, including an extruder for the polyester layer, having a diameter of 250 mmΦ, an extruder for a surface layer, having a diameter of 250 mmΦ, and an extruder for the intermediate layer, having a diameter of 250 mmΦ, was used for production in the following condition, and thus each sealant film of Examples 1 to 4 and Comparative Examples 1 to 3 was obtained. The thicknesses of the polyester layer, the surface layer and the intermediate layer as each layer of the sealant film produced were 40 µm, 15 µm and 5 µm, respectively, in all of Examples 1 to 4 and Comparative Examples 1 to 3.

### [Production condition]

Extruder temperature: 230°C
Die diameter: 250 mmΦ
Blowing ratio: 2.0
Molding speed: 13 m/min

A base film and a gas barrier film, separately from the sealant film, were stacked with a two-component curing type polyester-urethane adhesive interposed, by a dry lamination method. The sealant film produced above was stacked on the gas barrier film with a two-component curing type polyester-urethane adhesive interposed, by a dry lamination method, and thus each multilayer film of Examples 1 to 4 and Comparative Examples 1 to 3 was obtained.

The base film is polyethylene terephthalate (PET) and have a thickness of 12 µm. The gas barrier film is aluminum foil and have a thickness of 9 µm.

### (Comparative Example 4)

A multilayer film was prepared in the same manner as in Example 3, except that the sealant film was formed by a T-die method. The extruder temperature in a T-die extruder was 290°C.

### (Comparative Examples 5 to 11)

Each multilayer film was prepared in the same manner as in Example 1, except that butanediol was used in Comparative Examples 5 and 6, neopentyl glycol was used in Comparative Example 7, hexanediol was used in Comparative Example 8 and cyclohexane dimethanol was used in Comparative Examples 9 to 11, as glycol other than EG constituting the polyester layer, in respective ratio shown in Table 1.

### <Evaluation>

### (Evaluation test 1)

As an evaluation test 1, the low-temperature sealing properties were evaluated. Specifically, the multilayer films of Examples and Comparative Examples were individually sealed with the sealant films facing inwardly. For the sealing condition, the sealing pressure was 0.1 MPa and the sealing time was 1.0 second, and the sealing temperature was varied and a temperature where a seal strength of 5 N/15 mm width or more was exhibited was determined as the sealing initiation temperature based on JIS Z0238. The results are shown in the column "Sealing initiation temperature (°C)" in Table 1. A temperature of 130°C or less was evaluated as favorable.

### (Evaluation test 2)

As an evaluation test 2, the seal strength was evaluated. Specifically, the multilayer films of Examples and Comparative Examples were individually sealed with the sealant films facing inwardly. For the sealing condition, the sealing temperature was 160°C, the sealing pressure was 0.1 MPa and the sealing time was 1.0 second. The seal strength (N/15 mm) of two sealed multilayer films was measured for the strip-shaped cut multilayer films based on JIS X0238. The results are shown in the column "Seal strength (N/15 mm)" in Table 1. 30 N/15 mm or more was evaluated as favorable.

### (Evaluation test 3)

As an evaluation test 3, the adsorption properties were evaluated. Specifically, the multilayer films of Examples and Comparative Examples, cut into a predetermined shape (length: 120 mm, width: 120 mm), were individually placed on a bag making machine in a state where two multilayer films were stacked such that the sealant films were in contact with each other, and then the predetermined areas (periphery portion of the sealant film: range within 10 mm from the peripheral edge) were sealed to prepare a three-way sealed type packaging bag. At this point in time, in order to fill the packaging bag with a content, the upper end (top seal portion) of the packaging bag had not yet been sealed. For the sealing condition, the sealing temperature was 160°C, the sealing pressure was 0.1 MPa and the sealing time was 1.0 second.

Next, through the upper end of the packaging bag, the packaging bag was filled with sake ("Daiginjo" made by Hakutsuru Sake Brewing Co., Ltd.) under a nitrogen atmosphere, and then the upper end (top seal portion) of the packaging bag was sealed to seal the content. Note that ethyl caprate as an ingredient of sake here used is an ingredient that is generally easily adsorbed to a sealant film.

The packaging bag accommodating the content as described above was stored in a thermostatic chamber maintained at 40°C for 3 months. After storage, the head space in the packaging bag was subjected to concentration by a solid phase micro extraction method (SPME), quantitative determination from the preparation concentration of ethyl caprate used as the internal standard was performed by gas chromatography-mass spectroscopy analysis (GC-MS), and a ratio of the residual amount after the storage period to the initial amount was calculated as the residual ratio of ethyl caprate (%). The results are shown in the column "Residual ratio (%)" in Table 1. 70% or more was evaluated as favorable.

### (Evaluation test 4)

As an evaluation test 4, the amount of an oligomer was evaluated. Specifically, each polyester layer of Examples and Comparative Examples described above was dissolved in hexafluoroisopropanol (HFIP), then the polyester layer was re-precipitated in acetonitrile and the supernatant was subjected to filtration with a filter to prepare a sample solution, and measurement was performed in the following condition with reverse-phase HPLC (1260 Infinity II LC system made by Agilent Technologies, Inc.).

### [Measurement condition]

Detector: ultraviolet absorption photometer
Measurement wavelength: 242 nm
Column: reverse-phase column C18 ODS5 µ (length: 250 mm, inner diameter: 4.6 mm)
Column temperature: 25°C
Eluent: acetonitrile/water = 7/3
Flow rate: 1.5 ml/min
Amount of sample injected: 20 µl

Peak waveform processing was performed by vertically dividing the peak areas of a plurality of peak portions at an elution time of 5 minutes to 20 minutes, with respect to each elution time, and normalizing the quantity of each of the peak areas with the measured weight of the polyester layer, in the molecular weight distribution by HPLC as obtained above. The measurement was repeated three times and the average value of the peak areas was adopted. The results are shown in the column "Amount of oligomer (wt%)" in Table 1. An amount of less than 2.0 wt% was evaluated as favorable.

For each polyester layer of the sealant films used in Examples 1 to 4 and Comparative Examples 1 to 11, the glass transition temperature, the crystallization temperature and the melting temperature measured based on JIS K7121 with a differential scanning calorimeter are shown together in Table 1.

**[Table 1]**

| | Configuration of polyester layer | | | | Evaluation items | | | | | | |
|---|---|---|---|---|---|---|---|---|---|---|---|
| | Dibasic acid | | Diol | | Glass transition temperature (°C) | Crystallization temperature (°C) | Melting temperature (°C) | Sealing initiation temperature (°C) | Seal strength (N/15 mm) | Residual ratio (%) | Amount of oligomer (wt%) |
| | TPA (mol%) | IPA (mol%) | EG (mol%) | Other glycol (mol%) | | | | | | | |
| Example 1 | 95 | 5 | 100 | 0 | 76 | 135 | 238 | 130 | 42.4 | 74.9 | 1.8 |
| Example 2 | 92 | 8 | 100 | 0 | 72 | 132 | 231 | 125 | 38.5 | 71.0 | 1.8 |
| Example 3 | 90 | 10 | 100 | 0 | 74 | 138 | 222 | 120 | 34.8 | 81.2 | 1.7 |
| Example 4 | 88 | 12 | 100 | 0 | 71 | 149 | 214 | 120 | 33.0 | 78.0 | 1.7 |
| Comparative Example 1 | 83 | 17 | 100 | 0 | 70 | - | - | 120 | 28.5 | 66.5 | 2.1 |
| Comparative Example 2 | 80 | 20 | 100 | 0 | 72 | - | - | 115 | 27.1 | 58.8 | 2.4 |
| Comparative Example 3 | 70 | 30 | 100 | 0 | 73 | - | - | 115 | 26.5 | 50.1 | 2.7 |
| Comparative Example 4* | 90 | 10 | 100 | 0 | 74 | 138 | 222 | 120 | 33.3 | 80.2 | 2.0 |
| Comparative Example 5 | 100 | 0 | 65 | 35 | 54 | 114 | 180 | 180 | - | 37.7 | 2.1 |
| Comparative Example 6 | 92 | 8 | 65 | 35 | 52 | - | - | 135 | 22.6 | 35.0 | 2.3 |
| Comparative Example 7 | 100 | 0 | 50 | 50 | 56 | 118 | 168 | 170 | - | 36.8 | 2.0 |
| Comparative Example 8 | 100 | 0 | 70 | 30 | 58 | 120 | 173 | 175 | - | 37.2 | 2.2 |
| Comparative Example 9 | 100 | 0 | 70 | 30 | 72 | - | - | 140 | 19.8 | 38.5 | 1.9 |
| Comparative Example 10 | 97 | 3 | 95 | 5 | 79 | 124 | 249 | - | 16.6 | 43.5 | 2.1 |
| Comparative Example 11 | 90 | 10 | 95 | 5 | 69 | - | - | 130 | 27.4 | 53.3 | 2.1 |

| | | | | | | | | | | | |
|---|---|---|---|---|---|---|---|---|---|---|---|
| * Sealant layer formed by T-die method | | | | | | | | | | | |

From the results shown in Table 1, it is found that each of the multilayer films of Examples 1 to 4 including the sealant film including a polyester layer containing specified polyester as a main ingredient includes an oligomer in a small amount of less than 2.0 wt%, and is excellent in low adsorption properties of contents and can inhibit odor and taste from being deteriorated.

In contrast, in Comparative Examples 1 to 3 where a polyester containing IPA in an amount exceeding a defined amount was used, it is found that the amount of an oligomer is 2.0 wt% or more, adsorption properties of contents are high and deterioration in odor and taste cannot be suppressed. Furthermore, in Comparative Example 4 where the sealant film was produced at the same composition as that in Example 3, except that the sealant film is formed by a T-die method, it is found that the amount of an oligomer is 2.0 wt%, adsorption properties of contents are high and deterioration in odor and taste cannot be suppressed. Furthermore, in Comparative Examples 5 to 11 where glycol other than EG was used, it is found that adsorption properties of contents are high.

It should be considered that the embodiments and examples now disclosed are illustrative in all respects and not intended to be limiting. The scope of the present disclosure is defined not by the description above but by the claims, and is intended to include all modifications within the meaning equivalent to the claims and the scope of the claims.

### REFERENCE SIGNS LIST

1 Sealant film; 11 Polyester layer; 12 Surface layer; 13 First intermediate layer; 14 Interposed layer; 15 Second intermediate layer; 16 Back surface layer; 2 Multilayer film; 31, 32, 33, 34, 35 Base film; 4, 41, 42 Gas barrier film; 51, 52, 53 Adhesive layer

## Claims

1. A sealant film comprising a polyester layer containing polyester as a main ingredient,
wherein the polyester is made of a structural unit derived from ethylene glycol, a structural unit derived from terephthalic acid and a structural unit derived from isophthalic acid,
a ratio of the structural unit derived from isophthalic acid is 3.0 mol% or more and 15 mol% or less relative to ratios of the structural unit derived from terephthalic acid and the structural unit derived from isophthalic acid constituting the polyester, and
a content rate of an oligomer contained in the polyester layer is less than 2.0% by mass.

2. The sealant film according to claim 1, wherein the polyester has a glass transition temperature of 60°C or more and 80°C or less.

3. The sealant film according to claim 1 or claim 2, comprising a surface layer,
wherein the surface layer is at least one selected from the group consisting of polyethylene, an ethylene-acrylate copolymer and an ethylene-methacrylate copolymer.

4. The sealant film according to claim 3, further comprising an intermediate layer between the polyester layer and the surface layer,
wherein the intermediate layer is at least one selected from the group consisting of an acid anhydride-grafted polyethylene and an ethylene-ester copolymer.

5. The sealant film according to any one of claim 1 to claim 4, wherein the polyester layer has a thickness of 20 µm or more and 50 µm or less.

6. A multilayer film comprising:
a base film; and
the sealant film according to any one of claim 1 to claim 5.

7. The multilayer film according to claim 6, further comprising a gas barrier film between the base film and the sealant film.

8. A packaging bag comprising the multilayer film according to claim 6 or claim 7 sealed such that the sealant films are fused to each other.

9. A packaging container comprising the multilayer film according to claim 6 or claim 7 sealed such that the sealant films are fused to each other.

10. A method for producing a sealant film comprising a polyester layer containing polyester as a main ingredient,
wherein the production method of the sealant film comprises an extrusion step of extruding a resin constituting the polyester layer, by an inflation method,
a temperature in the extrusion step is 180°C or more and 260°C or less,
the polyester is made of a structural unit derived from ethylene glycol, a structural unit derived from terephthalic acid and a structural unit derived from isophthalic acid,
a ratio of the structural unit derived from isophthalic acid is 3.0 mol% or more and 15 mol% or less relative to ratios of the structural unit derived from terephthalic acid and the structural unit derived from isophthalic acid constituting the polyester, and
a content rate of an oligomer contained in the polyester layer is less than 2.0% by mass.
